# EUROPÄISCHE PATENTSCHRIFT

(11) **EP 3 311 213 B1**
(45) Veröffentlichungstag und Bekanntmachung des Hinweises auf die Patenterteilung: **27.05.2020**
(21) Anmeldenummer: 16727477.8
(22) Anmeldetag: 03.06.2016
(51) Int. Cl.: G02B 21/00

(54) **VERFAHREN ZUR BESTIMMUNG UND KOMPENSATION GEOMETRISCHER ABBILDUNGSFEHLER**
METHOD FOR DETERMINING AND COMPENSATING FOR GEOMETRIC ABERRATIONS
PROCÉDÉS DE DÉTERMINATION ET DE COMPENSATION DES ERREURS GÉOMÉTRIQUES D'IMAGERIE

(30) Priorität: 17.06.2015 DE 102015109674
(43) Veröffentlichungstag der Anmeldung: 25.04.2018
(73) Patentinhaber: Carl Zeiss Microscopy GmbH, 07745 Jena (DE)
(72) Erfinder: ANHUT, Tiemo, 07745 Jena (DE); HAASE, Daniel, 07751 Zöllnitz (DE); KLEMM, Frank, 07747 Jena (DE); ROSCHER, Burkhard, 07743 Jena (DE); SCHWEDT, Daniel, 07745 Jena (DE); KAUFHOLD, Tobias, 07749 Jena (DE)
(74) Vertreter: Gleim Petri Oehmke Patent- und Rechtsanwaltspartnerschaft mbB
(86) Internationale Anmeldenummer: PCT/EP2016/062644
(87) Internationale Veröffentlichungsnummer: WO 2016/202612

(56) Entgegenhaltungen:
- DE-T5-112013 003 671
- US-A1- 2002 162 955
- US-A1- 2003 055 588
- US-A1- 2009 008 539

## Beschreibung

### Gebiet der Erfindung

Die Erfindung betrifft ein Verfahren zur Bestimmung und Kompensation geometrischer Abbildungsfehler, die bei der Abbildung eines Objektes durch sequentielle Einzel- oder Multispotabtastung mittels eines mikroskopischen Abbildungssystems, beispielsweise eines Laser-Scanning-Mikroskops, entstehen.

Die Abtastung erfolgt mit zu Lichtpunkten, den Spots, fokussierter Laserstrahlung, wobei möglichst viele Orte des Objektes nacheinander von jedem Spot beleuchtet und das von den beleuchteten Objektpunkten reflektierte oder durch Fluoreszenz generierte Licht einzeln detektiert wird. Die Detektionssignale umfassen Informationen über Ursprungsort und Helligkeit und entsprechen damit Einzelbildern der Objektpunkte. Die Gesamtheit der aus der Fokusebene eines Mikroskopobjektivs gewonnenen Detektionssignale ergibt eine Abbildung dieser Ebene des Objektes.

Dabei ist stets der Idealfall anzustreben, nämlich dass der Ort jedes Einzelbildes im Gesamtbild genau dem Ort des zugehörigen Punktes auf oder in dem realen Objekt entspricht. Dadurch werden dann auch die Teilbilder der durch unterschiedliche Punkte per Multispotabstastung gescannten Probenbereiche aufeinander beziehbar, so dass eine Überlagerung und Verrechnung identischer Bildinhalte möglich wird.

Dies ist jedoch aufgrund diverser technisch und technologisch bedingter Einflüsse bei der Bildgewinnung in der Regel nicht der Fall. Die Ursache liegt in Genauigkeitstoleranzen der mechanischen, optischen oder auch elektronischen Baugruppen des jeweils verwendeten Abbildungssystems.

So unterliegt beispielsweise die von einer Scanneinrichtung erzeugte Scanbewegung Nichtlinearitäten bezüglich Richtung, Geschwindigkeit und/oder Amplitude, die dazu führen, dass die Idealbedingung nicht erfüllt und das Objekt geometrisch verzerrt abgebildet wird.

### Stand der Technik

Um derartige Einflüsse zumindest zu verringern, wird in DE 19702752 C2 vorgeschlagen, die Ansteuerkurven für die Scanner so zu modifizieren, dass eine möglichst lineare Scanbewegung erreicht wird. Dazu bei Verwendung eines Laser-Scanning-Mikroskops, das zwecks linear oszillierender Ablenkung eines Strahlenbündels mit einem Schwingmotor zum Antreiben eines Schwingspiegels, mit einer Ansteuereinheit zur Speisung des Schwingmotors mit einem veränderbaren Erregerstrom, mit einem Funktionsgenerator und mit einem Meßwertaufnehmer zur Gewinnung einer Folge von Informationen über die Ablenkpositionen des Schwingspiegels ausgestattet ist. Der Meßwertaufnehmer ist zur Ermittlung von Korrekturwerten für den Erregerstrom mit dem Funktionsgenerator verknüpft, mit denen die vom Funktionsgenerator ausgegebenen Ansteuerfrequenzen so beeinflußt werden, dass die Abweichungen zumindest minimiert werden.

Trotz dieser Maßnahme führen verbleibende Restfehler immer noch zu Bildverzerrungen, besonders in Form von Stauchungen und Streckungen der Abbildung in Richtung der Scanbewegung.

Bei Abbildungssystemen mit bidirektionaler Scanbewegung, wie zum Beispiel in US2009/0008539A offenbart, wird zwar vorteilhaft die Scangeschwindigkeit verdoppelt, nachteilig dabei ist aber, dass die Nichtlinearitäten der Scanbewegung in beiden Scanrichtungen an verschiedenen Orten auftreten, so dass es zu seitlichem Versatz der Bildpunkte gegenüber den zugehörigen Objektpunkten kommt, bekannt unter der Bezeichnung Bidi-Fehler.

Auch eine gegenseitige Beeinflussung der beiden X- und Y-Scanachsen beim zweidimensionalen Abtasten kann zu so genanntem Wobble (taumeln, schwanken) und damit ebenfalls zu geometrischen Abbildungsfehlern führen.

Insbesondere die durch Nichtlinearitäten des Scanvorgangs verursachten Verzerrungen treten bei Multispotbildgebung in jedem Teilbild an bezogen auf die Bildinformationen verschiedenen Positionen auf, da sie zeitgleich auf jeden Anregungsspot wirken, die Laserspots in der Probe aber gegeneinander versetzt angeordnet sind. Somit lassen sich identische Bildinhalte aus den verschiedenen Teilbildern nicht deckungsgleich überlagern.

Weichen Parameter des optischen Designs ortsfester Baugruppen des Abbildungssystems, etwa von Objektiven, von vorgegebenen Parametern ab, verursacht auch das geometrische Abbildungsfehler, beispielsweise in Form tonnen- oder kissenförmiger Verzeichnungen. US2002/0162955A offenbart eine Korrektur von geometrischen Abbildungsfehlern sowie eine Modifikation von den Ansteuerkurven.

### Beschreibung der Erfindung

Von diesem Stand der Technik ausgehend besteht die Aufgabe der Erfindung darin, ein Verfahren der eingangs genannten Art zu schaffen, das die dargestellten Nachteile nicht mehr aufweist.

Die Aufgabe wird für ein Verfahren der eingangs genannten Art mit folgenden Verfahrensschritten gelöst.
- Festlegen eines Bezugsobjektes, das eine definierte, in Abbildungen darstellbare ebene Struktur aufweist,
- von dem Abbildungssystem unabhängige Erzeugung eines von geometrischen Abbildungsfehlern freien elektronischen Bilddatensatzes dieser Struktur, in welchem jedem Ort eines Bildpunktes eineindeutig der Ort des verursachenden Objektpunkt zugeordnet ist,
- Speichern und Vorhalten des Bilddatensatzes als Referenz-Bilddatensatz,
- Erzeugen mindestens eines elektronischen Ist-Bilddatensatzes mit dem Abbildungssystem, in welchem wiederum jedem Bildpunkt der verursachende Objektpunkt zugeordnet ist,
- Vergleichen des Ist-Bilddatensatzes mit dem Referenz-Bilddatensatz bezüglich der Orte derjenigen Bildpunkte, die denselben Objektpunkten zugeordnet sind,
- Bestimmen von Orts-Abweichungen der Bildpunkte im Ist-Bilddatensatz gegenüber den entsprechenden Bildpunkten im Referenz-Bilddatensatz,
- Speichern ermittelter Orts-Abweichungen als Korrektionsdaten,
- Kompensation der geometrischen Abbildungsfehler durch Korrektur der Orts-Abweichungen im Ist-Bilddatensatz anhand der Korrektionsdaten.

Als geometrische Abbildungsfehler im Sinne dieser Erfindung gelten sowohl aufgrund von Nichtlinearitäten bei der Multispotabtastung verursachte geometrische Abbildungsfehler, im weiteren als Verzerrungen bezeichnet, als auch aufgrund von abweichenden Parametern des optischen Designs verursachte geometrische Abbildungsfehler, im weiteren Verzeichnungen genannt.

Unter Nichtlinearität sind Abweichungen von Soll-Werten der beispielsweise von einer Scaneinrichtung vorgegebenen Geschwindigkeit, Richtung und/oder Amplitude zwecks Abtastung der Objektpunkte zu verstehen. Verzeichnungen dagegen sind von optischen Baugruppen des Abbildungssystems verursachte lokale Veränderung des Abbildungsmaßstabes, insbesondere die Änderung der Vergrößerung mit zunehmendem Abstand der Bildpunkte von der optischen Achse. Die Verzeichnung ist durch rotationssymmetrische Verteilung um einen Punkt, dem Verzeichnungszentrum, charakterisiert, wie z.B. kissen- oder tonnenförmige Veränderung einer Quadratabbildung oder wellenförmigen Abbildung gerader Linien bei der Überlagerung von Verzeichnungen höherer Ordnung (Wikipedia "Verzeichnungen").

Der Verfahrensschritt "Speichern und Vorhalten dieses Bilddatensatzes als Referenz-Bilddatensatz" dient im Weiteren zur Kalibrierung des Abbildungssystems, das zur Erzeugung des Ist-Bilddatensatzes verwendet wird.

Im Ergebnis der Ausübung des erfindungsgemäßen Verfahrens liegt ein bezüglich der geometrischen Abbildungsfehler korrigierter elektronischer Ist-Bilddatensatz vor, aus dem in an sich bekannter Weise visuell wahrnehmbare und - infolge der vorangegangenen Korrektur - geometrisch fehlerfreie Abbildungen erzeugt werden.

In unterschiedlichen Ausgestaltungen des erfindungsgemäßen Verfahrens werden
- die Kompensationsdaten zur Verzerrungs-Korrektur und die Kompensationsdaten der Verzeichnungs-Korrektur gesondert, d.h. zeitlich voneinander getrennt ermittelt, und
- entweder unmittelbar im Verlaufe der Einzel- oder Multispotabtastung oder zeitlich danach der Korrektur zugrunde gelegt.

Bei der zur Korrektur von Verzerrungen vorgesehenen Ausgestaltung des erfindungsgemäßen Verfahrens wird die Erfassung der Kompensationsdaten entweder anhand nur eines Ist-Bilddatensatzes oder - vorzugsweise zwecks Erhöhung der Genauigkeit - anhand mehrerer Ist-Bilddatensätze vorgenommen, wobei die Ist-Bilddatensätze bei jeweils verschiedenen Scangeschwindigkeiten, Scanrichtungen und/oder Scanamplituden aufgenommen. Die Kompensationsdaten werden im letzteren Fall aus der Gegenüberstellung der statistisch gemittelten oder interpolierten Orte der Bildpunkte in den Ist-Bilddatensätzen mit den entsprechenden Orten der Bildpunkte im Referenz-Bilddatensatz ermittelt.

In einer besonders vorteilhaften Ausgestaltung ist vorgesehen, die tatsächlich mit der Scaneinrichtung erzeugten Ist-Ablenkwinkel zu erfassen, mit den Soll-Ablenkwinkeln zu vergleichen, aus dem Vergleich Korrekturwerte für die Scanneransteuerung zu ermitteln und damit die Scanneransteuerung zu optimieren. Die Korrektur der Abbildungsfehler mit dem erfindungsgemäßen Verfahren lässt sich mit dieser Option noch effizienter ausführen.

Die Verfahrensschritte zur Korrektur von Verzerrungen werden vorzugsweise während der Einzel- oder Multispotabtastung des Objektes vorgenommen, wobei im Multispotverfahren die Kompensation für jeden Spot einzeln erfolgt.

Bei der zur Korrektur von Verzeichnungen vorgesehenen Ausgestaltung des erfindungsgemäßen Verfahrens ist vorgesehen, entweder
- einen Ist-Bilddatensatz mit einer bestimmten Wellenlänge des Beleuchtungslichts aufzunehmen und die Kompensationsdaten aus Orts-Abweichungen der Bildpunkte im Ist-Bilddatensatz gegenüber den entsprechenden Bildpunkten im Referenz-Bilddatensatz zu erzeugen, oder - vorzugsweise zwecks Genauigkeitserhöhung
- mehrere Ist-Bilddatensätze mit verschiedenen Wellenlängen des Beleuchtungslichts aufzunehmen und die Kompensationsdaten aus der Gegenüberstellung der statistisch gemittelten oder interpolierten Orte der Bildpunkte in den Ist-Bilddatensätzen mit den entsprechenden Orten der Bildpunkte im Referenz-Bilddatensatz zu erzeugen.

Die Verfahrensschritte zur Korrektur von Verzeichnungen werden vorzugsweise zeitlich nach der Multispotabtastung des Objektes vorgenommen, wobei auch hier im Multispotverfahren die Kompensation für jeden Spot einzeln erfolgt.

Als Bezugsobjekt wird beispielsweise ein planes Gitter oder eine elektronisch generierte Gitterstruktur verwendet. Die dem Vergleich mit dem Referenz-Bilddatensatz zugrunde zu legenden Ist-Bilddatensätze werden bei beiden Ausgestaltungen vorteilhaft mit jeweils maximal möglicher Bildfeldgröße und geringstmöglicher Scangeschwindigkeit aufgenommen.

Ein wesentlicher Vorteil des erfindungsgmäßen Verfahrens ist es, dass nach dessen Anwendung in Bezug auf ein konkretes mikroskopisches Abbildungssystem die Korrektionsdaten diesem Abbildungssystem fest zugeordnet und so korrigierte Abbildungen von beliebigen weiteren Objekten erzeugt werden können.

Das erfindungsgemäße Verfahren ist auch anwendbar zur Bestimmung und Kompensation von geometrischen Abbildungsfehlern, die bei Abbildungen eines Objektes durch sequentielle Einzel- oder Multispotabtastung mittels eines durch Austausch optischer Baugruppen modifizierbaren mikroskopischen Abbildungssystem entstehen, beispielsweise eines Laser-Scanning-Mikroskops mit auswechselbaren Objektiven.

Dabei werden
- entweder jeder austauschbaren Baugruppen separat, oder
- dem jeweils durch Baugruppenaustausch ummodifizierten gesamten Abbildungssystem Korrektionsdaten zugeordnet und der Kompensation der geometrischen Abbildungsfehler zugrunde gelegt.

### Kurze Beschreibung der Zeichnungen

Nachfolgend wird die Erfindung anhand von Ausführungsbeispielen näher erläutert. In den zugehörigen Zeichnungen zeigen
- Fig.1: die Abtastung eines Objektes mit einem Multispot, der n = 4 einzelne Spots umfasst, die senkrecht zur Scanrichtung X nebeneinander liegen.
- Fig.2: die Abtastung eines Objektes mit einem Multispot, der n = 4 einzelne Spots umfasst, die in der Scanrichtung X nebeneinander liegen und mit gleicher Helligkeit auf das Objekt gerichtet sind,
- Fig.3: die Abtastung eines Objektes mit einem Multispot, der n = 4 einzelne Spots umfasst, die in der Scanrichtung X nebeneinander liegen und mit unterschiedlicher Helligkeit auf das Objekt gerichtet sind.

### Ausführliche Beschreibung der Zeichnungen

In einem ersten Ausführungsbeispiel wird das erfindungsgemäße Verfahren anhand einer Einzelspotabtastung eines Objektes zum Zweck der Objektabbildung nach dem Prinzip des konfokalen Laserscanning erläutert, wobei mit dem fortlaufend rasterartig auf die Objektoberfläche gerichteten, zu einem Einzelspot fokussierten Laserstrahl neben der Objektgeometrie zugleich auch die Intensität des reflektierten Lichts bezogen auf die einzelnen jeweils benachbarten Objektpunkte erfasst wird.

Mittels einer Punktblende wird dabei nur Licht aus der Fokusebene detektiert und so ein Bilddatensatz des Objektes aus dieser Ebene mit hoher Tiefenauflösung gewonnen. Wird jeweils nach der Abtastung einer Ebene die Fokussierung geändert, erhält man Bilddatensätze aus weiteren Ebenen und daraus schließlich eine 3D-Aufnahme des Objektes.

Das Abrastern des Objektes erfolgt üblicherweise durch Ablenkung der Laserstrahlung mittels Scanspiegeln, beispielsweise Galvanometer- oder Mikrosystem-Spiegeln, auch mit anderen Ablenkmitteln, wie akusto-optischen Deflektoren. Neben beweglichen Baugruppen zur ein- oder zweidimensionalen Ablenkung durchläuft das Laserlicht von der Strahlungsquelle bis zur Detektionseinrichtung auch ruhende optische Baugruppen, wie Scanobjektiv, sonstige Linsengruppen, Strahlumlenkelemente und/oder Strahlteiler.

Um bei Verwendung eines solchen Abbildungssystems zur Objektabbildung aus den bereits oben genannten Gründen auftretende geometrische Abbildungsfehler in Form von Verzerrungen und/oder Verzeichnungen erst zu bestimmen und nachfolgend zu kompensieren, werden beispielhaft die im folgenden angegebenen Verfahrensschritte ausgeführt:
a) von einem optischen Gitter wird ein von geometrischen Abbildungsfehlern freier elektronischer Bilddatensatzes generiert, in dem eineindeutig jedem Ort eines Gitterpunktes der Ort eines Bildpunktes zugeordnet ist. Dieser Bilddatensatz wird unabhängig von dem in den nachfolgenden Verfahrensschritten zu kalibrierenden Abbildungssystem generiert, beispielsweise unmittelbar elektronisch ohne optische Mittel,
b) dieser Bilddatensatz wird als Referenz-Bilddatensatz für die weiteren Verfahrensschritte vorgehalten,
c) unter Verwendung des zu korrigierenden Abbildungssystems, beispielweise eines Laser-Scanning-Mikroskops, wird ein Ist-Bilddatensatz entweder aus einer einzigen Aufnahme desselben Gitters mit nur einer bestimmten Scangeschwindigkeit, Scanrichtung und/oder Scanamplitude, vorzugsweise aber - zwecks Erhöhung der Genauigkeit der später vorzunehmenden Korrektur ermittelter Verzerrungen - aus mehreren Aufnahmen des Gitters mit jeweils verschiedenen Scangeschwindigkeiten, Scanrichtungen und/oder Scanamplituden gewonnen, deren Ergebnisse statistisch gemittelt werden,
d) der so erzeugte Ist-Bilddatensatz wird mit dem Referenz-Bilddatensatz bezüglich der Orte der Bildpunkte verglichen, die denselben Ort des Gitters als Ursprung haben,
e) die Orts-Abweichungen werden registriert und als Korrektionsdaten gespeichert, und
f) unter Zugrundelegung der Korrektionsdaten werden im Ist-Bilddatensatz die ermittelten Orts-Abweichungen und damit die Verzerrungen kompensiert.

Alternativ zu den Verfahrensschritten c) bis f) oder den Verfahrensschritten c) bis f) unmittelbar vor- oder nachgeordnet werden erfindungsgemäß die folgenden, beispielhaft angegebenen Verfahrensschritte vorgenommen, um Verzeichnungen zu kompensieren:
g) unter Verwendung des zu korrigierenden Abbildungssystems, beispielweise wiederum des Laser-Scanning-Mikroskops, wird ein Ist-Bilddatensatz entweder aus einer einzigen Aufnahme desselben Gitters mit einer bestimmten Wellenlänge des Beleuchtungslichts, vorzugsweise aber - zwecks Kompensation von Farbvergrößerungsfehlern - aus mehreren Aufnahmen des Gitters mit verschiedenen Wellenlängen des Beleuchtungslichts gewonnen, deren Ergebnisse statistisch gemittelt werden,
h) der so erzeugte Ist-Bilddatensatz wird mit dem Referenz-Bilddatensatz bezüglich der Orte der Bildpunkte verglichen, die denselben Ort des Gitters als Ursprung haben,
i) Orts-Abweichungen werden registriert und als Korrektionsdaten gespeichert, und
j) unter Zugrundelegung der Korrektionsdaten werden im Ist-Bilddatensatz die ermittelten Orts-Abweichungen und damit die Verzeichnungen kompensiert.

Die mit den Verfahrensschritten a) bis f) bzw. g) bis j) ermittelten Korrektionsdaten werden diesem Abbildungssystem fest zugeordnet, so dass unter deren Berücksichtigung mit demselben Abbildungssystem von beliebigen weiteren Objekten korrigierte Abbildungen erzeugt werden können. Dabei wird vorzugsweise die Kompensation der Verzerrungen während der Einzelspotabtastung, die Kompensation der Verzeichnungen nach Einzelspotabtastung des jeweiligen Objektes vorgenommen.

In einem zweiten nachfolgend beschriebenen Ausführungsbeispiel wird das erfindungsgemäße Verfahren anhand einer Multispotabtastung eines Objektes erläutert. Während bei der Einzelspotabtastung der Laserstrahl zu einem Spot, dem Einzelspot, fokussiert und damit die Abtastung des Objektes erfolgt, wird beim Multispotverfahren ein aus mehreren Einzelspots bestehender Multispot erzeugt und damit das Objekt abgetastet.

Das von den abgetasteten Objektpunkten reflektierte Licht wird in Zuordnung zu den einzelnen Spots detektiert und registriert. Dies erfolgt entweder durch räumlich separierte Detektion oder zeitliche Zuordnung.

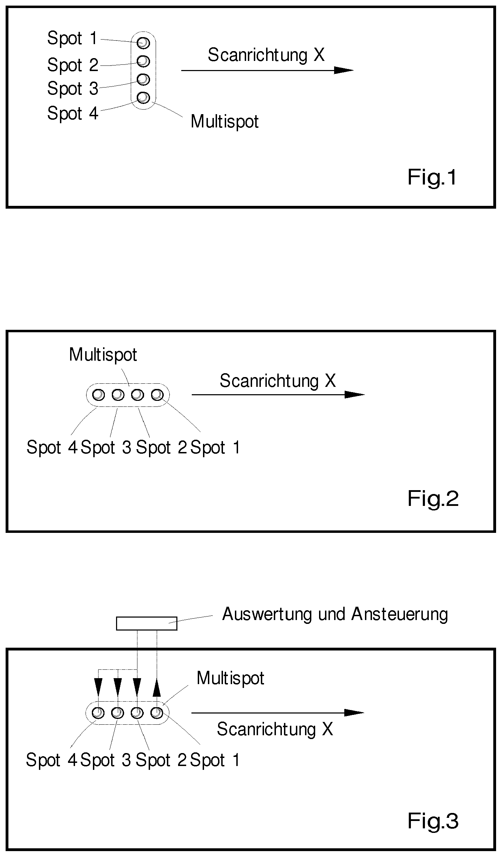

Es sind Verfahrensweisen bekannt, bei denen das Objekt mit einem Multispot abgetastet wird, der senkrecht zur Scanrichtung liegt. Mit einer solchen Multispotabtastung wird vorteilhaft ein n-fach schnelleres Abscannen des Objektes erzielt. Diesbezüglich zeigt Fig.1 beispielsweise einen Multispot, der n = 4 Spots umfasst, die senkrecht zur Scanrichtung X nebeneinander liegen.

Um beispielhaft für ein Laser-Scanning-Mikroskop geometrische Abbildungsfehler in Form von Verzerrungen und/oder Verzeichnungen zu bestimmen und zu kompensieren, werden erfindungsgmäß die o.g. Verfahrensschritte a) bis f) bzw. g) bis j) ausgeführt, und zwar stets bezogen auf die Orte der von jedem einzelnen Spot des Multispots generierten Bildpunkte, die demselben Objektpunkt zugeordnet sind, unabhängig von der Anzahl n der einzelnen Spots.

In einem dritten nachfolgend beschriebenen Ausführungsbeispiel wird das erfindungsgemäße Verfahren anhand einer Multispotabtastung eines Objektes erläutert, wobei die einzelnen Spots anders als beim vorgenannten Ausführungsbeispiel nicht senkrecht zur Scanrichtung X, sondern in der Scanrichtung X nebeneinander liegen und so direkt hintereinander über das Objekt geführt werden. Diesbezüglich zeigt Fig.2 beispielsweise einen Multispot, der n=4 in Scanrichtung X hintereinander liegende einzelne Spots umfasst.

Um auch in diesem Fall beispielhaft für ein Laser-Scanning-Mikroskop Verzerrungen und/oder Verzeichnungen zu bestimmen und zu kompensieren, werden erfindungsgmäß die o.g. Verfahrensschritte a) bis f) bzw. g) bis j) ausgeführt, und zwar wiederum stets bezogen auf die Orte der von jedem einzelnen Spot des Multispots generierten Bildpunkte, die demselben Objektpunkt zugeordnet sind, unabhängig von der Anzahl n der Spots des Multispots.
Im einfachsten Fall sind hierbei alle einzelnen Spots gleich hell eingestellt, womit eine n-fache Mittelung der Bilddaten mit einem Scan erzielbar ist.

Bei einer weiteren diesbezüglichen Ausgestaltung jedoch sind die n Spots unterschiedlich hell einstellt. Damit ist es möglich, mit nur einem Scan digitale Hochkontrastbilder nach dem HDRI-Verfahren (High Dynamic Range Image) zu erhalten, was insbesondere bei schnell beweglichen Objekten die Aufnahme notwendiger Teilbilder in schneller Folge erlaubt.

Eine noch weiter vervollkommnete Qualität der Abbildung wird erreicht, wenn die sequentiell über das Objekt geführten Spots des Multispots einzeln in ihrer Intensität variiert werden, indem eine Rückkopplung der detektierten Signalintensität eines vorlaufenden einzelnen Spots auf die Beleuchtungsintensität der nachfolgenden Spots im Multispot erfolgt, wie in Fig.3 symbolisch dargestellt. Die räumliche Trennung der Spots, welche sich bei sequentiellem Abscannen des Objektes in eine zeitliche Trennung übersetzt, entspannt dann die Anforderungen an die Regelschleife drastisch und macht eine sinnvolle Regelung bei herkömmlichen Scangeschwindigkeiten überhaupt erst möglich. Vorteilhaft wird damit auch ein Problem umgangen, welches bei der Umsetzung einer dynamischen Beleuchtung dadurch entsteht, dass innerhalb der Pixelzeit die Beleuchtung geregelt werden muss. Bei den in der konfokalen Mikroskopie vorkommenden Pixelzeiten im Mikrosekundenbereich kann dies häufig nicht realisiert werden. Eine zu langsame Regelung kann die Lichtintensität dann nicht anpassen, eine zu schnelle Regelung hingegen neigt zu Überschwingern und damit dazu, Artefakte in der Bildgebung zu erzeugen.

So kann beispielhaft die Intensität des Spots 1 sehr gering eingestellt werden, um das Objekt möglichst wenig zu beleuchten und damit zu schonen. Sollte die Intensität des Signals bereits einen hinreichend hohen, zuvor definierten Wert erreichen, so bleiben die nachfolgenden Spots 2 bis 4 unbeeinflusst. In anderen Fällen wird die Intensität der Beleuchtung so nachgeregelt, dass das betreffende Signal entsprechend stärker ausfällt. Dieses Verfahren zur geregelten Beleuchtung führt insbesondere zu einer Erhöhung der Dynamik in einem aus den Einzelbildern verrechneten Bild. Weiterhin wird die Probe dadurch insofern geschont, als nur so viel Licht wie am lokalen Probenort für die Signalgenerierung notwendig in die Probe eingebracht wird.

Bei einer solchen Multispotabtastung mit geregelter Helligkeit der einzelnen Spots 1 bis 4 kann es zwar ebenfalls zu den beschriebenen geometrischen Abbildungsfehlern kommen. Um auch hierbei Verzerrungen und/oder Verzeichnungen zu bestimmen und zu kompensieren, werden erfindungsgmäß die o.g. Verfahrensschritte a) bis f) bzw. g) bis j) ausgeführt, und zwar wiederum bezogen auf die Orte der von jedem einzelnen Spot des Multispots generierten Bildpunkte, die demselben Objektpunkt zugeordnet sind, unabhängig von der Anzahl n der Spots im Multispot.

Ein weiterer Vorteil dieser erfindungsgemäßen Verfahrensweise besteht in der Möglichkeit einer sehr variablen Einstellung der Scanrichtung in dem Sinne, dass die Spots nicht streng hintereinander über die Probe geführt werden müssen. Vielmehr kann das Bildfeld in der für die Scanningmikroskopie üblichen Art und Weise dadurch gedreht werden, dass Amplitude und Phase der Scannerschwingung z.B. beider Galvoscanner entsprechend dem gewünschten Bildfeld eingestellt werden. Damit wird eine primäre Scanrichtung vorgegeben. Eine Überlagerung der Bildinhalte wird dann nach Entzerrung aufgrund des festen Bezugs der Bilder zueinander erreicht. Für die Anwendung der oben beschriebenen Verfahren zur Bildaufnahme mit hoher Dynamik bzw. der geregelten dynamischen Beleuchtung heißt das, dass die Scanner die Probe in beliebiger Richtung abscannen können, solange sichergestellt ist, dass jeder Ort der Probe von jedem Einzelspot überstrichen wird. Die jeweilige zeitliche Differenz zwischen dem Überstreichen der Probe durch verschiedene Multispots ist dann verschieden und abhängig von der primären Scanrichtung.

## Patentansprüche

1. Verfahren zur Bestimmung und Kompensation von geometrischen Abbildungsfehlern, die bei der Abbildung eines Objektes durch sequentielle Multispotabtastung mittels eines mikroskopischen Abbildungssystems entstehen,
**umfassend folgende Verfahrensschritte:**
- Festlegen eines Bezugsobjektes mit einer definierten ebenen Struktur,
- Erzeugung eines von geometrischen Abbildungsfehlern freien elektronischen Bilddatensatzes dieser Struktur, in welchem jedem Ort eines Bildpunktes eineindeutig der verursachende Ort des Objektes zugeordnet ist,
- Speichern und Vorhalten des Bilddatensatzes als Referenz-Bilddatensatz,
- Erzeugen mindestens eines elektronischen Ist-Bilddatensatzes mit dem Abbildungssystem für jeden Spot, in welchem wiederum jedem Ort eines Bildpunktes der verursachende Ort des Objektes zugeordnet ist,
- Vergleichen des Ist-Bilddatensatzes mit dem Referenz-Bilddatensatz bezüglich der Orte derjenigen Bildpunkte, die denselben Orten des Objektes zugeordnet sind,
- Bestimmen von Orts-Abweichungen der Bildpunkte im Ist-Bilddatensatz gegenüber den entsprechenden Bildpunkten im Referenz-Bilddatensatz,
- Speichern ermittelter Orts-Abweichungen als Korrektionsdaten,
- für jeden einzelnen Spot Kompensation der geometrischen Abbildungsfehler durch Korrektur der Orts-Abweichungen im jeweiligen Ist-Bilddatensatz anhand der Korrektionsdaten.

2. Verfahren nach Anspruch 1, bei dem
- aufgrund von Nichtlinearität bei der Multispotabtastung verursachte geometrische Abbildungsfehler, und
- aufgrund von abweichenden Parametern des optischen Designs verursachte geometrische Abbildungsfehler
- voneinander getrennt erfasst und der Kompensation der Abbildungsfehler während oder zeitlich nach der Multispotabtastung zugrundgelegt werden.

3. Verfahren nach Anspruch 2, bei dem die infolge Nichtlinearität der Geschwindigkeit, der Richtung und/oder der Amplitude einer Scaneinrichtung verursachten geometrischen Abbildungsfehler erfasst und der Kompensation zugrunde gelegt werden.

4. Verfahren nach Anspruch 3, bei dem
- die Erfassung anhand mehrerer Ist-Bilddatensätze bei jeweils verschiedenen Scangeschwindigkeiten, Scanrichtungen und/oder Scanamplituden vorgenommen wird und
- die Kompensationsdaten aus statistisch gemittelten oder interpolierten Orts-Abweichungen der Bildpunkte in den Ist-Bilddatensätzen gegenüber den entsprechenden Bildpunkten im Referenz-Bilddatensatz erzeugt werden.

5. Verfahren nach einem der Ansprüche 3 oder 4, bei dem zusätzlich die tatsächlich mit der Scaneinrichtung erzeugten Ist-Ablenkwinkel erfasst, mit den Soll-Ablenkwinkeln verglichen und daraus Korrekturwerte ermittelt und diese genutzt werden, um mit einer korrigierten Ansteuerung der Scaneinrichtung die Abweichungen zu minimieren.

6. Verfahren nach einem der Ansprüche 3 bis 5, bei dem die Kompensation der Orts-Abweichungen während der Multispotabtastungen des Objektes vorgenommen wird.

7. Verfahren nach Anspruch 2, bei dem aufgrund von abweichenden Parametern des optischen Designs verursachte geometrische Abbildungsfehler erfasst werden, indem
- ein Ist-Bilddatensatz mit einer bestimmten Wellenlänge des Beleuchtungslichts aufgenommen wird und die Kompensationsdaten aus Orts-Abweichungen der Bildpunkte im Ist-Bilddatensatz gegenüber den entsprechenden Bildpunkten im Referenz-Bilddatensatz erzeugt werden, oder
- mehrere Ist-Bilddatensätze mit verschiedenen Wellenlängen des Beleuchtungslichts aufgenommen und die Kompensationsdaten aus statistisch gemittelten oder interpolierten Orts-Abweichungen der Bildpunkte in den Ist-Bilddatensätzen gegenüber den entsprechenden Bildpunkten im Referenz-Bilddatensatz erzeugt werden.

8. Verfahren nach Anspruch 7, bei dem die Kompensation der Orts-Abweichungen zeitlich nach der Multispotabtastung des Objektes vorgenommen wird.

9. Verfahren nach einem der vorgenannten Ansprüche, bei dem die Ist-Bilddatensätze mit jeweils maximal möglicher Bildfeldgröße und geringstmöglicher Scangeschwindigkeit erzeugt werden.

10. Verfahren nach einem der vorgenannten Ansprüche, bei dem als Bezugsobjekt ein Objekt mit einer planen Gitterstruktur verwendet wird.

11. Verfahren nach einem der vorgenannten Ansprüche, bei dem die Korrektionsdaten dem Abbildungssystem fest zugeordnet und damit korrigierte Abbildungen von beliebigen weiteren Objekten erzeugt werden.

12. Verfahren nach einem der vorgenannten Ansprüche, bei dem
- jeder abzubildende Ort des Objektes mit mehreren Spots zeitlich nacheinander beleuchtet wird, und dabei
- eine Rückkopplung der detektierten Signalintensität eines vorlaufenden Spots auf die Beleuchtungsintensität eines oder mehrerer der nachfolgenden, auf denselben Ort des Objektes gerichteten Spots vorgenommen wird, so dass aufgrund der geregelten Beleuchtungsintensität
- sowohl eine erhöhte Dynamik bei der Abbildung der einzelnen Orte des Objektes,
- als auch eine Optimierung, insbesondere Verringerung der Strahlenbelastung des Objektes erzielt wird.

13. Verfahren nach einem der vorgenannten Ansprüche zur Bestimmung und Kompensation von geometrischen Abbildungsfehlern, die bei Abbildungen eines Objektes durch sequentielle Multispotabtastung mittels eines durch Austausch optischer Baugruppen modifizierbaren mikroskopischen Abbildungssystem entstehen, insbesondere mittels Laser-Scanning-Mikroskop, wobei
- jeder austauschbaren Baugruppen separate Korrektionsdaten, oder
- dem jeweils durch Baugruppenaustausch ummodifizierten Abbildungssystem gesamt Korrektionsdaten
- zugeordnet und der Kompensation der geometrischen Abbildungsfehler zugrunde gelegt werden.

## Claims

1. Method for determining and compensating for geometric imaging aberrations which arise when imaging an object by means of sequential multispot scanning by means of a microscopic imaging system, **comprising the following method steps:**
- setting a reference object having a defined planar structure,
- generating an electronic image data set of this structure, which data set is free of geometric imaging aberrations and in which data set the causal location of the object is assigned with one-to-one correspondence to each location of an image point,
- storing and keeping the image data set available as a reference image data set,
- generating at least one electronic actual image data set for each spot with the imaging system, in which the causal location of the object is in turn assigned to each location of an image point,
- comparing the actual image data set with the reference image data set with respect to the locations of those image points which are assigned to the same locations of the object,
- determining location deviations of the image points in the actual image data set vis-à-vis the corresponding image points in the reference image data set,
- saving ascertained location deviations as correction data,
- compensating for the geometric imaging aberrations for each individual spot by means of correcting the location deviations in the respective actual image data set, on the basis of the correction data.

2. Method according to Claim 1, in which
- geometric imaging aberrations caused due to non-linearity in the multispot scanning, and
- geometric imaging aberrations caused due to deviating parameters of the optical design
- are captured separately from one other and are taken as a basis for the compensation of the imaging aberrations during or temporally after the multispot scanning.

3. Method according to Claim 2, in which the geometric imaging aberrations caused due to non-linearity of the speed, the direction and/or the amplitude of a scanning apparatus are captured and are taken as a basis for the compensation.

4. Method according to Claim 3, in which
- the capturing is carried out on the basis of a plurality of actual image data sets with different respective scanning speeds, scanning directions and/or scanning amplitudes and
- the compensation data are generated from statistically averaged or interpolated location deviations of the image points in the actual image data sets vis-à-vis the corresponding image points in the reference image data set.

5. Method according to either of Claims 3 and 4, in which the actual deflection angles actually generated with the scanning apparatus are additionally captured, compared with the desired deflection angles and hence correction values are ascertained and these are used to minimize the deviations with a corrected actuation of the scanning apparatus.

6. Method according to any of Claims 3 to 5, in which the location deviations are compensated for during the multispot scans of the object.

7. Method according to Claim 2, in which geometric imaging aberrations caused on account of deviating parameters of the optical design are captured by virtue of the fact that
- an actual image data set is recorded with a specific wavelength of the illumination light and the compensation data are generated from location deviations of the image points in the actual image data set vis-à-vis the corresponding image points in the reference image data set, or
- a plurality of actual image data sets are recorded with different wavelengths of the illumination light and the compensation data are generated from statistically averaged or interpolated location deviations of the image points in the actual image data sets vis-à-vis the corresponding image points in the reference image data set.

8. Method according to Claim 7, in which the location deviations are compensated for temporally after the multispot scanning of the object.

9. Method according to any of the preceding claims, in which the actual image data sets are generated with maximum possible image field size and lowest possible scanning speed in each case.

10. Method according to any of the preceding claims, in which an object having a plane lattice structure is used as reference object.

11. Method according to any of the preceding claims, in which the correction data are fixedly assigned to the imaging system and corrected images of any desired additional objects are thereby generated.

12. Method according to any of the preceding claims, in which
- each location, to be imaged, of the object is illuminated with a plurality of spots in temporal succession, and in the process
- the detected signal intensity of a leading spot is fed back to the illumination intensity of one or more of the following spots, directed to the same location of the object, so that, on the basis of the closed-loop controlled illumination intensity,
- both a higher dynamic range in the imaging of the individual locations of the object,
- and an optimization, in particular a reduction of the radiation loading of the object, are achieved.

13. Method according to any of the preceding claims for determining and compensating for geometric imaging aberrations which arise when imaging an object by means of sequential multispot scanning by means of a microscopic imaging system modifiable by replacing optical assemblies, in particular by means of a laser scanning microscope, wherein
- separate correction data are assigned to each replaceable assembly, or
- correction data as a whole are assigned to the imaging system remodified in each case by means of assembly replacement
- and are taken as a basis for the compensation of the geometric imaging aberrations.

## Revendications

1. Procédé de détermination et de compensation d'erreurs de représentation géométriques qui se produisent lors de la représentation d'un objet par balayage multipoints séquentiel au moyen d'un système de représentation microscopique,
comprenant les étapes suivantes :
- spécification d'un objet de référence ayant une structure plane définie,
- génération d'un jeu de données d'image électronique exempt d'erreurs de représentation géométriques de cette structure, dans lequel à chaque lieu d'un pixel est associé univoquement le lieu de l'objet qui l'a produit,
- mémorisation et réservation du jeu de données d'image en tant que jeu de données d'image de référence,
- génération d'au moins un jeu de données d'image réel électronique avec le système de représentation pour chaque point, dans lequel à chaque lieu d'un pixel est à son tour associé le lieu de l'objet qui l'a produit,
- comparaison du jeu de données d'image réel au jeu de données d'image de référence pour ce qui concerne les lieux des pixels qui sont associés aux mêmes lieux de l'objet,
- détermination des écarts de lieu des pixels dans le jeu de données d'image réel par rapport aux pixels correspondants dans le jeu de données d'image de référence,
- mémorisation des écarts de lieu identifiés en tant que données de correction,
- pour chaque point individuel, compensation de l'erreur de représentation géométrique par correction des écarts de lieu dans le jeu de données d'image réel respectif à l'aide des données de correction.

2. Procédé selon la revendication 1, avec lequel
- les erreurs de représentation géométriques causées en raison de la non-linéarité lors du balayage multipoints, et
- les erreurs de représentation géométriques causées en raison des paramètres divergents de la conception optique
- sont détectées séparément les unes des autres et servent de base à la compensation des erreurs de représentation pendant ou chronologiquement après le balayage multipoints.

3. Procédé selon la revendication 2, avec lequel les erreurs de représentation géométriques causées en raison de la non-linéarité de la vitesse, de la direction et/ou de l'amplitude d'un dispositif de balayage sont détectées et servent de base à la compensation.

4. Procédé selon la revendication 3, avec lequel
- la détection est effectuée à l'aide de plusieurs jeux de données réels à des vitesses de balayage, des directions de balayage et/ou des amplitudes de balayage respectivement différentes et
- les données de compensation sont générées à partir d'écarts de lieu des pixels, dont la moyenne a été déterminée ou qui ont été interpolés statistiquement, dans les jeux de données réels par rapport aux pixels correspondants dans le jeu de données de référence.

5. Procédé selon l'une des revendications 3 ou 4, avec lequel l'angle de déviation réel effectivement généré par le dispositif de balayage est détecté, comparé avec les angles de déviation de consigne et, à partir de là, des valeurs de correction sont identifiées et utilisées pour réduire au minimum les écarts par une commande corrigée du dispositif de balayage.

6. Procédé selon l'une des revendications 3 à 5, avec lequel la compensation des écarts de lieu est effectuée pendant les balayages multipoints de l'objet.

7. Procédé selon la revendication 2, avec lequel les erreurs de représentation géométriques causées en raison des paramètres divergents de la conception optique sont détectées en
- enregistrant un jeu de données d'image avec une longueur d'onde déterminée de la lumière d'éclairage et en générant les données de compensation à partir des écarts de lieu des pixels dans le jeu de données réel par rapport aux pixels correspondants dans le jeu de données de référence, ou
- enregistrant plusieurs jeux de données réels avec des longueurs d'onde différentes de la lumière d'éclairage et en générant les données de compensation à partir des écarts de lieu des pixels, dont la moyenne a été déterminée ou qui ont été interpolés statistiquement, dans les jeux de données réels par rapport aux pixels correspondants dans le jeu de données de référence.

8. Procédé selon la revendication 7, avec lequel la compensation des écarts de lieu est effectuée chronologiquement après le balayage multipoints.

9. Procédé selon l'une des revendications précédentes, avec lequel les jeux de données réels sont générés respectivement avec la taille du champ d'image maximale possible et la vitesse de balayage la plus faible possible.

10. Procédé selon l'une des revendications précédentes, avec lequel l'objet de référence utilisé est un objet ayant une structure en réseau plane.

11. Procédé selon l'une des revendications précédentes, avec lequel les données de correction sont attribuée à demeure au système de représentation et des représentations corrigées avec celles-ci de quelconques objets supplémentaires sont générées.

12. Procédé selon l'une des revendications précédentes, avec lequel
- chaque lieu à représenter de l'objet est éclairé avec plusieurs points se suivant chronologiquement, et
- une rétroaction de l'intensité de signal détectée d'un point en avance est ici effectuée sur l'intensité d'éclairage d'un ou plusieurs des points suivants, orientés sur le même lieu de l'objet, de sorte que l'intensité d'éclairage régulée permet d'obtenir
- à la fois une dynamique accrue lors de la représentation des lieux individuels de l'objet,
- et aussi une optimisation, notamment une réduction de l'exposition aux rayonnements de l'objet.

13. Procédé selon l'une des revendications précédentes de détermination et de compensation d'erreurs de représentation géométriques qui se produisent lors des représentations d'un objet par balayage multipoints séquentiel au moyen d'un système de représentation microscopique modifiable par remplacement de sous-ensembles optiques, notamment au moyen d'un microscope à balayage laser,
- des données de correction séparées étant associées à chacun des sous-ensembles remplaçables, ou
- des données de correction globales au système de représentation respectivement non modifié par le remplacement de sous-ensemble
- et servant de base à la compensation des erreurs de représentation géométriques.
